**Europäisches Patentamt**

**European Patent Office**

**Office européen des brevets**

(11) Veröffentlichungsnummer: **0 408 937 A1**

## EUROPÄISCHE PATENTANMELDUNG

(21) Anmeldenummer: 90112213.5

(22) Anmeldetag: 27.06.90

(51) Int. Cl.5: **B01J 41/04**

(30) Priorität: 20.07.89 DE 3924100

(43) Veröffentlichungstag der Anmeldung:
23.01.91 Patentblatt 91/04

(84) Benannte Vertragsstaaten:
AT BE CH DE ES FR GB GR IT LI LU NL SE

(71) Anmelder: **DIDIER-WERKE AG**
**Lessingstrasse 16-18**
**D-6200 Wiesbaden(DE)**

(72) Erfinder: **Bartke, Heinrich**
**Bergstrasse 45c**
**D-5340 Bad Honnef(DE)**

(74) Vertreter: **Brückner, Raimund**
**c/o Didier-Werke AG Hauptverw./Patentabt.**
**Postfach 2025 Lessingstrasse 16-18**
**D-6200 Wiesbaden1(DE)**

(54) Verfahren zur Entfernung von Schwermetallen aus Abwässern.

(57) Die Erfindung betrifft ein Verfahren zur Entfernung von Schwermetallen aus Abwässern, die auch Komplexbildner enthalten können.

Bei dem erfindungsgemäßen Verfahren wird den Abwässern ein wasserlösliches Cyanid-Salz zugesetzt, der gebildete Schwermetall-Cyanidkomplex an einem Anionenaustauscher gebunden, der mit Schwermetall-Cyanidkomplex beladene Anionenaustauscher periodisch regeneriert wird, und gegebenenfalls im behandelten Abwasser enthaltenes überschüssiges Cyanid zerstört.

Der Vorteil des erfindungsgemäßen Verfahrens liegt darin, daß Schwermetalle auch in Anwesenheit von Komplexbildnern aus Abwässern in einfacher Weise und unter Vermeidung des Zusatzes von nur umständlich wieder zu entfernenden Chemikalien abgetrennt werden können.

EP 0 408 937 A1

# VERFAHREN ZUR ENTFERNUNG VON SCHWERMETALLEN AUS ABWÄSSERN

Die Erfindung betrifft ein Verfahren zur Entfernung von Schwermetallen aus Abwässern, die auch Komplexbildner enthalten können.

In der Oberflächentechnik werden Behandlungslösungen Komplexbildner, z.B. Ammoniumsalze, Weinsäure, Nitriloessigsäure und Ethylendiamintetraessigsäure zugesetzt, welche die Fällung von Metallen, insbesondere Kupfer, Nickel, Zink und Eisen verhindern, wenn Metalle oder Metallegierungen behandelt werden. Die in solche Abwässer eingetretenen Metalle werden durch Zugabe von Natronlauge oder Kalkmilch nicht mehr ausgefällt, wobei insbesondere Ethylendiamintetraessigsäure (EDTA) eine Entfernung von gelösten Metallen in den Abwässern sehr schwierig und aufwendig macht.

Zur Entfernung von Kupfer aus ammoniakalischen oder zitronensäurehaltigen Abwässern ist die Zugabe von Kalziumionen und Schwefelverbindungen bereits bekannt. In der DE-AS 26 42 238 wird ein Verfahren beschrieben, bei welchem in Abwässern, die den starken Komplexbildner EDTA enthalten, zunächst eine Unkomplexierung durch Eisen erfolgt und anschließend das Kupfer mit einer mercaptohaltigen Triazinverbindung ausgefällt wird. Der Nachteil einer solchen Verfahrensweise ist, daß hierbei das giftige Kupferion durch ein weniger giftiges Metallion ausgetauscht wird und dadurch eigentlich keine Reduzierung der Gesamtmetallbeladung des Abwassers erfolgt. Weiterhin ist es bekannt, die im Abwasser enthaltenen Komplexbildner durch Zugabe von Oxidations- oder Reduktionsmitteln mit hohen Chemikalienüberschüssen zu zerstören, was jedoch in der Regel lange Reaktionszeiten erfordert und daher meist nur im ansatzweisen Betrieb möglich ist.

Prinzipiell können Schwermetall, wie Kupfer, Nickel, etc., durch Zugabe von Sulfidverbindungen, z.B. Natriumsulfid, Schwefelwasserstoff etc., in das Abwasser ausgefällt werden, wobei unlösliche Sulfidverbindungen entstehen. Neben den Nachteilen beim Einsatz solcher Chemikalien ist der weitere Nachteil gegeben, daß bei Abwässern mit geringer Metallbelastung noch eine zweite Stufe für die Zugabe von Flockungsmitteln, z.B. Eisensalzen, erforderlich ist, um eine Abtrennung durch Sedimentation und Filtration zu ermöglichen. Diese Verfahrensweise weist den weiteren Nachteil auf, daß eine zusätzliche Aufsalzung erfolgt und ein vergrößertes Schlammvolumen gebildet wird.

In der DE-PS 29 30 110 ist eine Verfahrensweise zur Abtrennung von Kupfer aus komplexbildnerhaltigen Abwässern beschrieben, bei dem das 2-wertige Kupfer bei einem pH-Wert von 4 bis 11 zunächst mittels Natriumdithionit reduziert und anschließend durch Zugabe einer Stickstoffverbindung als Feststoff aus dem Abwasser entfernt wird. Auch hierbei ist eine Entgiftung praktisch nur im ansatzweisen Verfahren möglich, da eine Reaktionssteuerung über Meßketten nur schwer durchzuführen wäre. Weiterhin ergibt sich bei dieser Verfahrensweise ebenfalls eine hohe Aufsalzung. Weiterhin ist bekannt, Schwermetalle in Abwässern mit Kationen-und/oder Selektiv-Ionenaustauschern zu entfernen. Diese Möglichkeit ist jedoch bei Vorliegen von Kcmplexbildnern durch die Stabilität der zwischen den Metallen und den Komplexbildnern gebildeten Komplexen stark eingeschränkt und insbesondere bei Vorliegen von EDTA nicht erfolgreich.

Aufgabe der vorliegenden Erfindung ist ein Verfahren zur Entfernung von Schwermetallionen aus Abwässern, welche gleichzeitig Komplexbildner enthalten können, das ohne hohen Chemikalienüberschuß auch im kontinuierlichen Betrieb durchgeführt werden kann.

Zur Lösung dieser Aufgabe dient das erfindungsgemäße Verfahren der zuvor beschriebenen Art, welches dadurch gekennzeichnet ist, daß

a) den Abwässern ein wasserlösliches Cyanid-Salz zugesetzt wird,

b) der gebildete Schwermetall-Cyanidkomplex an einem Anionenaustauscher gebunden wird,

c) der mit Schwermetall-Cyanidkomplex beladene Anionenaustauscher periodisch regeneriert wird, und

d) gegebenenfalls im bei Durchführung der Stufe b) anfallenden behandelten Abwasser enthaltenes überschüssiges Cyanid zerstört wird.

Unter Schwermetallen, welche in Abwässern vorliegen, sind insbesondere Kupfer, Nickel, Chrom, Eisen, Cadmium, Silber und Zink zu verstehen.

Komplexbildner sind die üblichen Komplexbildner, wie sie zuvor genannt wurden, insbesondere jedoch Ethylendiamintetraessigsäure (EDTA). Weitere Beispiele für solche Komplexbildner sind Triethanolamin, Ethylendiamin, Nitriloessigsäure und Gluconsäure.

In der Stufe a) des erfindungsgemäßen Verfahrens wird dem Abwasser zunächst eine wasserlösliche Cyanidverbindung zur Bildung von Metallcyanidkomplexen zudosiert.

Durch Analyse des Abwassers auf seinem Schwermetallgehalt kann die Zudosierung des Metallcyanids so erfolgen, daß eine möglichst geringe Menge an freiem Cyanid in dem Abwasser vorliegt, nachdem sich die Metallcyanidkomplexe gebildet haben. Als wasserlösliche Cyanide werden vorteilhafterweise Natriumcyanid oder Kaliumcyanid eingesetzt.

In der Stufe b) des erfindungsgemäßen Verfahrens wird der gebildete Schwermetall-Cyanidkomplex an einen Anionenaustauscher, insbesondere einen stark basischen Anionenaustauscher gebunden. Hierzu können handelsübliche Anionenaustauscher (z.B. Produkte mit der Warenbezeichnung Amberlite) verwendet werden. Die Behandlung mit dem Anionenaustauscher kann entweder ansatzweise oder in einer Kolonne erfolgen, wobei die Kontaktzeit zwischen dem Schwermetall-Cyanidkomplex enthaltenen Abwasser und dem Anionenaustauscher durch einfache Vorversuche festgelegt werden kann.

In der Stufe c) des erfindungsgemäßen Verfahrens wird der mit Schwermetallcyanidkomplexen beladene Anionenaustauscher periodisch regeneriert. Es ist zwar bekannt, daß mit Eisencyanidverbindungen beladene, stark basische Anionenaustauscher durch Einwirkung von Kochsalz regeneriert werden können. Untersuchungen haben jedoch ergeben, daß insbesondere Kupfer- und Nickel-Cyanidkomplexe nach dieser Methode nicht ausreichend vom Anionenaustauscher eluiert werden können. Daher ist es heute üblich, mit Schwermetall-Cyanidkomplexen beladene Anionenaustauscher durch Verbrennung bzw. Ablagerung auf einer Sondermülldeponie zu entsorgen.

Gemäß der Erfindung erfolgt die Regeneration des beladenen Anionenaustauschers in Stufe c) normalerweise mit einer Lösung von Natronlauge / Natriumcyanid und nachfolgend Kochsalzlösung. In Abhängigkeit des Beladungszustandes, insbesondere bei Anwesenheit von Nickel auf dem Anionenaustauscher wird als Vorbehandlung eine Kontaktierung mit einer Eisensalzlösung durchgeführt. Anschließend erfolgt eine Behandlung mit einer Mineralsäure und die weitere Eluierung mit Ammoniak.

Untersuchungen haben gezeigt, daß ein auf diese Weise behandelter Anionenaustauscher nach einer solchen Regeneration wieder voll einsatzfähig ist. Die bei der Regeneration anfallenden Eluate können problemlos in einer Standentgiftung durch Einwirkung von Oxidations- und Neutralisationsmitteln beseitigt werden.

Die Stufe d) des erfindungsgemäßen Verfahrens wird nur gegebenenfalls durchgeführt, falls bei dem in Stufe b) anfallenden, behandelten Abwasser freies Cyanid, d.h. überschüssiges Cyanid, vorhanden ist. Dieses Cyanid kann in an sich bekannter Weise mittels eines starken Oxidationsmittels zerstört werden.

Vorteilhafte Ausführungsformen des erfindungsgemäßen Verfahrens sind in den Ansprüchen 2 bis 13 näher beschrieben.

Gemäß einer bevorzugten Ausführungsform wird in der Stufe a) des Verfahrens ein Cyanidüberschuß angewandt. Hierdurch wird eine sichere Bildung der Schwermetall-Cyanidkomplexe erreicht.

Gemäß einer weiteren bevorzugten Ausführungsform wird der pH-Wert der Abwässer vor Durchführung der Stufe a) auf einen Wert > 7 eingestellt, vorzugsweise im Bereich von 10 bis 12; gegebenenfalls wird zur Einstellung eines solchen basischen pH-Wertes noch eine alkalische Verbindung, wie Natronlauge oder Kalilauge, zugesetzt.

Die Erfindung wird anhand der folgenden Beispiele näher erläutert.

Beispiel 1

Es wurde ein schwermetallhaltiges Abwasser folgender Zusammensetzung verwendet:
je 2 mg/l $Fe^{2+}$, $CU^{2+}$, $Ni^{2+}$, $Zn^{2+}$, $Cr^{3+}$, $Cd^{2+}$, + 50 mg/l EDTA.

Zu diesem Abwasser wurde Natriumcyanid zugesetzt, so daß es einen Gehalt von 25 mg/l $CN^-$ und einen pH-Wert von 11 aufwies.

1 l dieser Lösung wurden 24 h mit 5 ml eines starkbasischen Anionenaustauschers (Warenbezeichnung: Amberlite) gerührt und anschließend abfiltriert. Der Metallgehalt des Filtrates war wie folgt:
< 0,1 mg/l $Fe^{2+}$
< 0,1 mg/l $Cu^{2+}$
< 0,1 mg/l $Ni^{2+}$
< 0,1 mg/l $Zn^{2+}$
< 0,1 mg/l $Cr^{3+}$
< 0,1 mg/l $Cd^{2+}$

Beispiel 2

Die Arbeitsweise von Beispiel 1 wurde wiederholt, wobei das Abwasser neben den genannten Metallen jedoch 500 mg/l an EDTA enthielt.

Zu diesem Abwasser wurde Natriumcyanid bis zu einem Gehalt von 50 mg/l $CN^-$ und einem pH-Wert von 11 zugesetzt.

Nach derselben Behandlung wie in Beispiel 1 wurde ein Filtrat mit folgenden Metallgehalten erhalten:
0,9 mg/l $Fe^{2+}$
< 0,1 mg/l $Cu^{2+}$
< 0,1 mg/l $Ni^{2+}$
0,7 mg/l $Zn^{2+}$
< 0,1 mg/l $Cr^{3+}$
2,0 mg/l $Cd^{2+}$

Beispiel 3

Die Arbeitsweise von Beispiel 1 wurde wiederholt, wobei ein Abwasser mit folgender Zusammensetzung verwendet wurde:

je 2 mg/l $Fe^{2+}$, $CU^{2+}$, $Ni^{2+}$, $Zn^{2+}$, $Cr^{3+}$, $Cd^{2+}$, 3000 mg/l Weinsäure.

Zu diesem Abwasser wurde Natriumcyanid bis zu einem Gehalt von 25 mg/l $CN^-$ und einem pH-Wert von 11 zugesetzt.

1 l der erhaltenen Lösung wurde 24 h mit 5 ml eines starkbasischen Anionenaustauschers (Warenbezeichnung Amberlite) gerührt und anschließend abfiltriert. Im Filtrat ergaben sich folgende Metallgehalte:

< 0,1 mg/l $Fe^{2+}$
< 0,1 mg/l $Cu^{2+}$
< 0,1 mg/l $Ni^{2+}$
< 0,1 mg/l $Zn^{2+}$
< 0,1 mg/l $Cr^{3+}$
< 0,1 mg/l $Cd^{2+}$

Beispiel 4

Es wurde ein Abwasser verwendet, das einen Gehalt von 10 mg/l an $Ag^+$ und 500 mg/l $NH_3$ aufwies.

Zu diesem Abwasser wurde Natriumcyanid bis zu einer Konzentration von 10 mg/l $CN^-$ zugesetzt.

1 l dieser Lösung wurde wiederum 24 h mit 5 ml eines starkbasischen Anionenaustauschers (Warenbezeichnung Amberlite) gerührt und anschließend abfiltriert.

Im Filtrat ergab sich folgender Metallgehalt:
< 0,02 mg/l $Ag^+$

Beispiel 5

In das in Beispiel 1 erhaltenen Filtrat wurde Ozon eingeleitet, bis freies Cyanid $CN^-$ nicht mehr nachgewiesen werden konnte.

Beispiel 6

Der in Beispiel 1 verwendete Anionenaustauscher wurde zunächst mit einer Eisen-II-Lösung kontaktiert. Anschließend wurde 6 %ige Salzsäure und nach gründlicher Spülung 5 %ige Ammoniaklösung verwendet.

Nach der eigentlichen Regeneration mit einer NaOH/NaCN-Lösung und Kochsalzlösung war der Austauscher nach der Spülung wieder einsatzbereit.

**Ansprüche**

1. Verfahren zur Entfernung von Schwermetallen aus Abwässern,
dadurch gekennzeichnet, daß

a) den Abwässern ein wasserlösliches Cyanid-Salz zugesetzt wird,

b) der gebildete Schwermetall-Cyanidkomplex an einem Anionenaustauscher gebunden wird,

c) der mit Schwermetall-Cyanidkomplex beladene Anionenaustauscher periodisch regeneriert wird, und

d) gegebenenfalls im bei Durchführung der Stufe b) anfallenden behandelten Abwasser enthaltenes überschüssiges Cyanid zerstört wird.

2. Verfahren nach Anspruch 1,
dadurch gekennzeichnet,
daß in Stufe a) eine ausreichende Cyanidmenge, bezogen auf die im Abwasser vorhandenen Schwermetallionen, zugesetzt wird.

3. Verfahren nach einem der vorhergehenden Ansprüche,
dadurch gekennzeichnet,
daß der pH-Wert der Abwässer vor Durchführung der Stufe a) auf einen pH-Wert von > 7 eingestellt wird.

4. Verfahren nach einem der vorhergehenden Ansprüche,
dadurch gekennzeichnet,
daß in Stufe b) ein starkbasischer Anionenaustauscher verwendet wird.

5. Verfahren nach einem der vorhergehenden Ansprüche,
dadurch gekennzeichnet,
daß in Stufe c) die Regenerierung des Anionenaustauschers mehrstufig erfolgt.

6. Verfahren nach Anspruch 5,
dadurch gekennzeichnet,
daß eine Lösung von Natriumcyanid und Natronlauge zur Regeneration verwendet wird.

7. Verfahren nach Anspruch 5,
dadurch gekennzeichnet,
daß eine Behandlung mit einer Natriumchloridlösung durchgeführt wird.

8. Verfahren nach Anspruch 5,
dadurch gekennzeichnet,
daß in Abhängigkeit der Art der Schwermetallbeladung als Vorbehandlung vor der Regeneration eine Kontaktierung mit einer Eisensalzlösung durchgeführt wird.

9. Verfahren nach Anspruch 5,
dadurch gekennzeichnet,
daß eine Behandlung mit einer starken Säure durchgeführt wird.

10. Verfahren nach Anspruch 5,
dadurch gekennzeichnet,
daß eine Behandlung mit einer Ammoniaklösung durchgeführt wird.

11. Verfahren nach den Ansprüchen 6 bis 10,
dadurch gekennzeichnet,
daß die Behandlungsschritte für die Regeneration in ihrer Reihenfolge abhängig von der Art der Schwermetallbeladung durchgeführt werden.

12. Verfahren nach einem der vorhergehenden Ansprüche,
dadurch gekennzeichnet,
daß in Stufe d) die Zerstörung von überschüssigem Cyanid durch ein starkes Oxidationsmittel bewirkt wird.

13. Verfahren nach einem der vorhergehenden Ansprüche,
dadurch gekennzeichnet,
daß die in Stufe c) beim Regenerieren anfallenden Regeneriereluate, welche Cyanid-Ionen enthalten, mit einem starken, cyanidzerstörenden Oxidationsmittel behandelt werden.

Europäisches
Patentamt

**EUROPÄISCHER RECHERCHENBERICHT**

Nummer der Anmeldung

EP 90 11 2213

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-4 732 609 (FREY) <br> * Spalte 2, Zeilen 10-47; Spalte 3, Zeilen 1-15; Spalte 4, Zeile 60 - Spalte 5, Zeile 18; Spalte 2, Zeilen 32-67 * <br> --- | 1-4 | B 01 J 41/04 |
| A | US-A-4 267 159 (CRITS) <br> * Spalte 1, Zeilen 17-27; Spalte 3, Zeile 29 - Spalte 4, Zeile 36 * <br> --- | 1,4,5,7 | |
| A | DE-A-2 602 441 (STEINMÜLLER) <br> * Seite 1, Patentanspruch * <br> --- | 6 | |
| A | BE-A- 678 088 (DAESTER-FAIRTEC) <br> --- | | |
| A | CHEMICAL ABSTRACTS, Band 87, 1977, Seite 342, Zusammenfassung Nr. 11124r, Columbus, Ohio, US; & JP-A-76 103 668 (STANLEY ELECTRIC CO., LTD) 13-09-1976 * Zusammenfassung * <br> --- | 13 | |
| A | US-A-3 984 314 (FRIES) <br> * Spalte 2, Zeilen 3-4 * <br> ----- | 8 | RECHERCHIERTE SACHGEBIETE (Int. Cl.5) <br><br> B 01 J |

Der vorliegende Recherchenbericht wurde für alle Patentansprüche erstellt

| Recherchenort | Abschlußdatum der Recherche | Prüfer |
|---|---|---|
| DEN HAAG | 04-10-1990 | WENDLING J.P. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
..................................................................................................
& : Mitglied der gleichen Patentfamilie, übereinstimmendes
    Dokument

EPO FORM 1503 03.82 (P0403)